# EUROPÄISCHE PATENTANMELDUNG

(11) **EP 4 422 198 A1**
(43) Veröffentlichungstag der Anmeldung: **28.08.2024**
(21) Anmeldenummer: 23158468.1
(22) Anmeldetag: 24.02.2023
(51) Int. Cl.: H04N 23/88, H04N 23/85, G06V 10/28, G06V 10/82, G06T 7/90

(54) **FARBANPASSUNG VON FARBIGEN BILDDATEN**

(71) Anmelder: SICK AG, 79183 Waldkirch (DE)
(72) Erfinder: Ruf, Hannes, 79271 St. Peter (DE); Müller, Dr. Romain, 79252 Stegen (DE)

(57) **Zusammenfassung**

Es wird ein Verfahren zur Farbanpassung von farbigen Bilddaten angegeben, die von einem Bildsensor (18) als eine Vielzahl von Bildpunkten mit jeweils mehreren Farbkomponenten aufgenommen werden, wobei den Bildpunkten jeweils neue, farbangepasste Farbkomponenten zugewiesen werden und die Information, welche neuen Farbkomponenten zuzuweisen sind, durch ein Verfahren des maschinellen Lernens bestimmt wird, das vorab eine Zuordnungsvorschrift bestimmt, die möglichen aufgenommenen Farbkomponenten farbangepasste Farbkomponenten zuweist, wobei dann die Farbanpassung ohne weitere Beteiligung des Verfahrens des maschinellen Lernens mit der Zuordnungsvorschrift erfolgt.

## Beschreibung

Die Erfindung betrifft ein Verfahren zur Farbanpassung von farbigen Bilddaten nach dem Oberbegriff von Anspruch 1 und eine entsprechende Kamera mit einem Bildsensor zur Aufnahme farbiger Bilddaten und einer Farbanpassung.

Zu den vielfältigen Anwendungen, in denen Bilder aufgenommen und ausgewertet werden, zählen automatisierte Prozess in Industrie und Logistik. Neben diversen Mess-, Manipulations- und Prüfaufgaben ist das automatische Sortieren von Objekten anhand von Codes bekannt, die mit Hilfe der Bilddaten gelesen werden. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen, wie ein Maxicode oder ein Aztec-Code, oder auch Beschriftungen, die mit einerTexterkennung (OCR) dekodiert werden.

In einer typischen Anwendungssituation, etwa an einem Fertigungsband, bei einer Gepäckabfertigung in Flughäfen oder der automatisierten Sortierung von Paketen in Logistikzentren, werden die Objekte an der Kamera vorbei gefördert. Mit einem zweidimensionalen Bildsensor werden regelmäßig Bilddaten aufgenommen, die sich je nach Aufnahmefrequenz und Fördergeschwindigkeit mehr oder weniger überlappen. Mit einer wegen ihrer hohen Auflösung und Geschwindigkeit alternativ eingesetzten Zeilenkamera werden Bilddaten der Objekte mit den darauf angeordneten Codes durch zeilenweise Abtastung gewonnen. Die einzelnen Bildzeilen werden anhand der bekannten oder gemessenen Bandgeschwindigkeit zusammengesetzt. Damit die Objekte in beliebiger Orientierung auf dem Förderer angeordnet werden können, sind oft mehrere Kameras an einem Förderband vorgesehen, um Objekte von mehreren oder allen Seiten aufzunehmen.

Farbige Bilder werden herkömmlich meist mit Matrixkameras aufgenommen. Gerade bei schnellen Bandapplikationen hat das aber Nachteile, da eine hohe Framerate benötigt wird und das Zusammenfügen von deren Einzelbildern (Stitching) im Gegensatz zum einfachen Aneinanderreihen von Bildzeilen sehr rechenaufwändig wird. Außerdem kann ein Matrixbildsensor in Zeilenrichtung nicht dieselbe Pixelanzahl erreichen wie ein Zeilenbildsensor. Zeilenkameras umgekehrt nehmen typischerweise ein monochromes Bild auf, das auch als Grauwertbild oder Schwarz-Weiß-Bild bezeichnet wird. Damit wird die beste Photonenausbeute und daher das beste Signal-Rausch-Verhältnis erreicht, und speziell für das Lesen von Codes, die ohnehin nur helle und dunkle Bereiche aufweisen, wird die Farberfassung bisher in der Regel nicht als interessant angesehen. Farbzeilenkameras sind jedoch auch bekannt.

Die verbreitetste Farbgewinnung mit einem Bildsensor basiert auf dem pixelweisen Vorsehen von jeweils zwei grünen, einem roten und einem blauen Filter in einem Bayer-Pattern. Alternative Farbmuster fügen beispielsweise einen Weißkanal hinzu (RGBW) oder verwenden subtraktive Grundfarben (CMY, Cyan, Magenta, Yellow gegebenenfalls als CMYK mit Schwarzanteil Key). Es gibt weitere Repräsentationen des Farbraums wie HSV (Hue, Saturation, Value) oder Lab beziehungsweise CIELAB. Gemeinsam ist allen Farbrepräsentationen, dass jeder Bildpunkt als Vektor mit mehreren Farbkomponenten aufgefasst werden kann. In einer Farbzeilenkamera werden die Farbmuster beispielsweise dadurch umgesetzt, dass drei Zeilen in rot, grün und blau, eine alternierende Anordnung dieser Grundfarben auf einer einzigen Zeile oder in Nachahmung des Bayer-Patterns eine Zeile mit alternierenden roten und blauen Pixeln und eine zweite rein grüne Zeile vorgesehen sind.

Bei einer Bildaufnahme kommt es durch individuelle Kameraeigenschaften und Umgebungseinflüsse zu Abweichungen zwischen den aufgenommenen Farben und Sollwerten dieser Farben. Eine Farbanpassung oder Farbkorrektur dient dazu, diese Abweichungen wenigstens teilweise zu kompensieren. Die Schwierigkeit besteht dann darin, die erforderlichen Korrekturen zu kennen, besonders im Falle komplexerer Abweichungen von nichtlinearer Natur. Grundsätzlich kommen dafür neuronale Netze in Betracht. Allerdings stehen in einer Kamera die erforderlichen Rechenressourcen nicht zur Verfügung oder würden jedenfalls einen erheblichen Kostenfaktor bedeuten, besonders unter Echtzeitanforderungen bei großen Datenmengen mit hochaufgelösten Bildern in hoher Aufnahmefrequenz.

Die EP 0 618 737 B1 befasst sich mit einem Bildverarbeitungssystem mit neuronalem Netz, das in einer Ausführungsform eine Farbkorrekturfunktion in Kombination mit einer Gammakorrekturfunktion und einer Kontrastkompressionsfunktion lernt und anwendet. Die Kombination einer Farbkorrektur mit weiteren Korrekturen erhöht die Komplexität weiter und erfordert noch mehr Rechenressourcen. Zudem wird es als unmöglich angesehen, die zugehörigen nichtlinearen Gleichungen über eine Nachschlagtabelle (LUT, Lookup Table) zu implementieren.

In der EP 0 820 188 B1 wird eine Farbkorrekturvorrichtung für Geräte wie einen Farbdrucker, einen Farbkopierer oder einen Farbbildschirm vorgestellt. Die Farbkorrektur beruht auf einer Nachschlagtabelle. In einer Ausführungsform wird vorgeschlagen, die Nachschlagtabelle durch ein neuronales Netz zu ersetzen, das jeweils eingangsseitig zugeführte Farbkomponenten Y, M, C, K in korrigierte Farbkomponenten Y`, M`, C`, K` überführt. Damit bleibt dann wieder das Problem bestehen, dem neuronalen Netz hinreichende Rechenressourcen zur Verfügung zu stellen.

Die EP 3 822 844 B1 offenbart eine Zeilenkamera mit mindestens einer weißen Zeile zur Aufnahme eines Grauwertbildes und mindestens einer farbigen Zeile zur Aufnahme eines Farbbildes. Dabei sind in der farbigen Zeile rote und blaue Lichtempfangspixel vorgesehen, während grüne Lichtempfangspixel fehlen. Die grüne Farbinformation kann mit Hilfe der weißen Zeile aus den roten und blauen Bildinformationen rekonstruiert werden. Zur Farbkorrektur kann eine Multiplikation mit einer Farbkorrekturmatrix erfolgen, die mit wenigen Koeffizienten die relative Gewichtung der Farbkanäle festlegt, wobei die Koeffizienten durch eine Farbkalibration bestimmt werden. Das ist für komplexe, nichtlineare Farbanpassungen nicht geeignet. Weiter wird eine Farbkorrektur mittels eines neuronalen Netzes erwähnt, an dessen Eingang ein roher oder vorkorrigierter Farbvektor vorgegeben wird, wobei dann das neuronale Netz einen korrigierten Farbvektor zurückliefert. Erneut kann das neuronale Netz nur funktionieren, wenn die erforderlichen Rechenressourcen bereitgestellt werden.

Die EP 4 080 402 A1 befasst sich mit einer Helligkeits- und Farbkorrektur von Bilddaten, die mit einer Zeilenkamera in Form eines Grauwertbildes und mindestens zweier Einfarbbilder aufgenommen werden. Es wird eine Helligkeitsfunktion individuell für ein jeweiliges Beleuchtungsmodul einer Zeilenkamera bestimmt und darin gespeichert. Die Zeilenkamera liest diese Helligkeitsfunktion aus und verwendet sie zur Korrektur des Grauwertbildes und der Einfarbbilder. Zusätzlich können für die Einfarbbilder Farbnormierungsmatrizen in Form einer Tabelle beziehungsweise Lookup Table gespeichert werden. Auch in diesem Dokument ist ein neuronales Netz als Alternative erwähnt, das einen Farbvektor in einen korrigierten Farbvektor übersetzt, ohne die Problematik der erforderlichen Rechenressourcen anzusprechen oder zu lösen.

Es ist daher Aufgabe der Erfindung, eine verbesserte Farbanpassung anzugeben.

Diese Aufgabe wird durch ein Verfahren zur Farbanpassung von farbigen Bilddaten nach Anspruch 1 und eine entsprechende Kamera mit einem Bildsensor zur Aufnahme farbiger Bilddaten und einer Farbanpassung nach Anspruch 13 gelöst. Die farbigen Bilddaten sind mit einem Bildsensor als Vielzahl von Bildpunkten oder Pixeln aufgenommen, wobei die Bildpunkte jeweils als Farbvektor mit mehreren Farbkomponenten repräsentiert werden können. Die Erfindung ist auf keine bestimmte Darstellung des Farbraums beschränkt, als Beispiel wird im Folgenden stellvertretend auf RGB Bezug genommen. Einleitend sind nicht abschließend mögliche weitere Darstellungen genannt. Es ist weiterhin denkbar, dass dieselbe Farbe durch mehrere Farbkomponenten wiedergegeben ist, wie im Falle eines Bayer-Patterns mit doppelter grüner Farbkomponente.

Farbanpassung oder Farbabgleich bedeutet, dass den Bildpunkten jeweils neue, angepasste Farbkomponenten zugewiesen werden. Abstrakt lässt sich das als eine im Allgemeinen nichtlineare Funktion aus einem Farbraum in einen Farbraum verstehen. Typischerweise bleibt die Funktion im selben Farbraum, ohne aber einen Wechsel auszuschließen, beispielsweise mit Bildaufnahme in RGB und angepassten Farben in CYMK.

Die Informationen, wie die jeweiligen neuen Farbkomponenten den aufgenommenen Farbkomponenten zuzuordnen sind, ist erfindungsgemäß durch ein Verfahren des maschinellen Lernens bestimmt. Die im Vorabsatz genannte Funktion wird demnach durch das Verfahren des maschinellen Lernens berechnet oder approximiert. Maschinelles Lernen soll hier insbesondere als Gegenbegriffzu herkömmlicher oder klassischer Bildverarbeitung verstanden werden. Eine klassische Bildverarbeitung ist schon mit ihrer Programmierung für ihre Aufgabe vorbereitet und bedarf nicht erst der Erfahrung beziehungsweise des Trainings, und ihre Leistungsfähigkeit ist von Anfang an bis über die gesamte Dauer der Anwendung mehr oder weniger konstant. Bei maschinellem Lernen hingegen hängt all dies bei Weitem nicht nur von einer programmierten Struktur ab, sondern ergibt sich erst im Zusammenhang mit einem Training und der Güte der Trainingsdaten. Im Folgenden wird meist ein neuronales Netz als Verfahren des maschinellen Lernens eingesetzt. Das ist ein derzeit besonders erfolgreicher Ansatz, um hochdimensionale nichtlineare Funktionen zu lernen und anzuwenden. Es gibt aber zahlreiche alternative Verfahren des maschinellen Lernens, die ebenfalls erfindungsgemäß zum Einsatz kommen können. Wie sogleich dargelegt, liefert das Verfahren des maschinellen Lernens zwar die notwendigen Informationen für den Farbabgleich, ist aber im Gegensatz zu herkömmlichen Lösungen nicht unmittelbar für die Übersetzung von aufgenommenen Farbkomponenten in neue, farbangepasste Farbkomponenten zuständig.

Die Erfindung geht von dem Grundgedanken aus, den Rechenaufwand für das Verfahren des maschinellen Lernens schon vorab zu leisten. Dazu wird mit dem Verfahren des maschinellen Lernens eine Zuordnungsvorschrift bestimmt, die möglichen aufgenommenen Farbkomponenten die zugehörigen Sollwerte oder farbangepassten Farbkomponenten zuweist. Zuordnungsvorschrift ist hier im Sinne einer festen Funktion zu verstehen, insbesondere einer Nachschlagtabelle. Die Zuordnungsvorschrift wird einmalig oder zumindest für eine längere Betriebsphase für ein bestimmtes Gerät und/oder eine bestimmte Anwendungssituation bestimmt. Das Verfahren des maschinellen Lernens bereit die spätere Farbanpassung nur vor. Im Betrieb oder zur Laufzeit erfolgt dann die eigentliche Farbanpassung für jeweils aufgenommene farbige Bilddaten mit der Zuordnungsvorschrift. Das Verfahren des maschinellen Lernens ist zur Laufzeit nicht mehr beteiligt.

Es handelt sich um ein computerimplementiertes Verfahren, das beispielsweise in einer Kamera oder einer daran angeschlossenen Recheneinheit abläuft.

Die Erfindung hat den Vorteil, dass eine leistungsfähige Farbanpassung ermöglicht wird, die komplexe Nichtlinearitäten berücksichtigt. Dabei sind die rechenaufwändigen Schritte ausgelagert und werden vorab geleistet. Beispielsweise kann die Zuordnungsvorschrift extern, unter nur vorübergehender Hinzunahme weiterer Rechenkapazitäten, und/oder mit langen Wartezeiten bestimmt werden. Zur Laufzeit muss lediglich noch die Zuordnungsvorschrift angewandt werden, was sich in einfachen Rechenschritten oder einem bloßen Nachschlagen in einer Tabelle erschöpft. Das ermöglicht eine Echtzeitfähigkeit auch mit moderaten Rechenkapazitäten, wie sie beispielsweise ein FPGA (Field Programmable Gate Array) bereitstellt. Die Erfindung erreicht damit eine Kombination der Leistungsfähigkeit eines Verfahrens des maschinellen Lernens und einer entsprechend hochwertigen Farbanpassung mit nur moderaten Anforderungen an die Hardware oder Kamera zur Laufzeit beziehungsweise im eigentlichen Betrieb bei der Bildaufnahme.

Das Verfahren des maschinellen Lernens ist bevorzugt für die Bestimmung der festen Zuordnungsvorschrift in einem überwachten Lernen mit Trainingsbilddaten trainiert, für die zu den Farbkomponenten der Bildpunkte eines jeweiligen Trainingsbildes die neuen Farbkomponenten vorgegeben sind. Das überwachte Lernen (supervised learning) ermöglicht, aus einem Trainingsdatensatz mit Beispielen einer vorgegebenen richtigen Bewertung auf später im Betrieb aufgenommene Bilddaten zu verallgemeinern. Entsprechende Architekturen und Algorithmen insbesondere für Training (beispielsweise Backpropagation) und Betrieb (Inferenz) neuronaler Netze sind für sich bekannt, so dass auf gut funktionierende Lösungen zurückgegriffen oder darauf aufgesetzt werden kann. Die Zuweisung der richtigen Bewertung zu den Trainingsbeispielen, also das Annotieren oder Labeling mit den zu lernenden Sollfarben, kann prinzipiell von Hand erfolgen, da das Training vor der Laufzeit stattfindet. Ergänzend oder alternativ kann ein weiterer Farbsensor sozusagen als Lehrer eingesetzt werden, der den Trainingsbeispielen die Sollfarben zuordnet. Dieser weitere Farbsensor kann durchaus aus anderen Gründen, etwa seiner Langsamkeit, Auflösung oder schlicht seiner Kosten, für die eigentliche Anwendung ungeeignet sein und wird nach der Bestimmung der Zuordnungsvorschrift wieder für andere Aufgaben frei.

Das Verfahren des maschinellen Lernens wird bevorzugt für eine individuelle Kamera und/oder eine bestimmte Anwendungssituation trainiert. Kamera steht hier wie vielfach in dieser Beschreibung als Begriff für ein Gerät, in dem der aufnehmende Bildsensor verbaut ist und in dem die Farbanpassung mit der Zuordnungsvorschrift erfolgt. Die Farbanpassung lässt sich mit dem Verfahren des maschinellen Lernens vollständig individualisieren, um optimale Ergebnisse zu erhalten. Alternativ ist denkbar, das Training nur einmal für eine Familie von Kameras durchzuführen und die erhaltene Zuordnungsvorschrift zu kopieren. In ähnlicher Weise kann eine vor Ort eingesetzte Kamera die für sie trainierte Zuordnungsvorschrift an ein Nachbar- oder Nachfolgegerät weitergeben. Denkbar sind weiterhin Hybridformen, in denen das Training des Verfahrens des maschinellen Lernens in einen ersten, nur einmalig für mehrere Kameras und/oder Anwendungssituationen durchgeführten Anteil und ein zweites individuelles Nachtraining aufgeteilt ist.

Die Zuordnungsvorschrift wird bevorzugt bereits auf Bildpunkte der Bilddaten angewandt, noch während weitere Bildpunkte der Bilddaten aus dem Bildsensor ausgelesen und/oder von dem Bildsensor aufgenommen werden. Die Farbanpassung erfolgt dann in Echtzeit oder noch während der Bildaufnahme beziehungsweise während des Bildauslesens. Das sukzessive Einlesen von Bilddaten wird auch als Streaming bezeichnet. Die Farbanpassung geschieht somit "on-the-fly" schon während des Streamings. Effektiv wird damit für die Farbanpassung keinerlei zusätzliche Verarbeitungszeit benötigt. Sobald die Bilddaten für eine nachgeordnete Bildverarbeitung überhaupt zur Verfügung stehen, sind sie auch schon farbkorrigiert. Da lediglich die Zuordnungsvorschrift anzuwenden ist, beispielsweise durch Einlesen oder Weitergeben der Bilddaten über die Nachschlagtabelle, werden dafür so gut wie keine Rechenressourcen und Verarbeitungszeiten benötigt. Kapazitäts- oder Zeitprobleme, die mit Inferenzen eines neuronalen Netzes zur Laufzeit verbunden wären, sind durch die erfindungsgemäß schon vorab bestimmte Zuordnungsvorschrift von Vorneherein gelöst.

Die Farbanpassung mittels Zuordnungsvorschrift ist bevorzugt auf einem Vorverarbeitungsbaustein implementiert, insbesondere einem FPGA (Field Programmable Gate Array), der mit dem Bildsensor verbunden ist. Insbesondere bei kamerabasierten Codelesern hat sich eine hybride Architektur etabliert, in der ein Vorverarbeitungsbaustein für solche Verarbeitungsschritte zuständig ist, die in sich nicht besonders komplex, aber auf große Datenmengen anzuwenden sind. Ein weiterer Verarbeitungsbaustein, beispielsweise ein Mikroprozessor, kümmert sich dann um nachgelagerte Verarbeitungsschritte vorzugsweise nur noch in interessierenden Bereichen oder anderweitig vorselektierten und dadurch reduzierten Datenmengen. Die erfindungsgemäße Farbanpassung anhand der Zuordnungsvorschrift zählt zu den Verarbeitungsschritten, die ein Vorverarbeitungsbaustein gut leisten kann. Für Inferenzen eines neuronalen Netzes hingegen wären zumindest in Echtzeit die Kapazitäten des Vorverarbeitungsbausteins vorzugsweise zu gering.

Der Bildsensor nimmt bevorzugt die farbigen Komponenten mit einer ersten Bittiefe auf, und die Nachschlagtabelle weist Einträge nur für eine zweite Bittiefe kleiner der ersten Bittiefe auf. Bei drei Farbkomponenten und einer ersten Bittiefe von beispielsweise acht Bit hätte eine vollständige Nachschlagtabelle Einträge für die Farbvektoren (0,0,0) bis (255, 255, 255) oder 256³ Einträge. Das ist kaum noch handhabbar beziehungsweise insbesondere für ein FPGA ein unerwünscht hoher Speicherbedarf. Mit einer geringeren zweiten Bittiefe von beispielsweise drei bis sieben Bit wird die Nachschlagtabelle vereinfacht. Beispielsweise sind für eine zweite Bittiefe von fünf nur noch 32³ Einträge in der Nachschlagtabelle erforderlich. Die Rückgabewerte der Nachschlagtabelle sind im Übrigen nicht an die zweite Bittiefe gebunden, vielmehr können von der Nachschlagtabelle neue, farbangepasste Farbkomponenten mit der ersten Bittiefe, der zweiten Bittiefe und prinzipiell jeder sonstigen Bittiefe zurückgegeben werden.

Neue Farbkomponenten für fehlende Einträge der Nachschlagtabelle werden vorzugsweise interpoliert. Die Reduktion auf die zweite Bittiefe geht zwangsläufig mit einer Näherung einher. Dies kann durch eine Interpolation zumindest teilweise wieder aufgefangen werden. In dem kleinen Unterraum des Farbraums zwischen den Einträgen der Nachschlagtabelle kann eine lineare Interpolation selbst bei einer global ganz und gar nicht linearen Zuordnungsvorschrift gute Ergebnisse liefern. Alternativ ist eine nichtlineare Interpolation vorstellbar. Da die Interpolation mehrdimensional ist und erfordert, mehrere benachbarte Einträge der Nachschlagtabelle auszulesen, kann vereinfachend nur komponentenweise interpoliert werden. Dann wird also nicht im ganzen Farbraum interpoliert, sondern beispielsweise die rote, grüne und blaue Farbkomponente jeweils nur in sich.

Vorteilhafterweise werden grauwertige Bilddaten der mit den farbigen Bilddaten erfassten Szenerie aufgenommen. Es gibt mit anderen Worten parallel zu der Farbaufnahme eine Schwarzweißaufnahme. Vereinheitlichend kann dies als ein weißer Farbkanal verstanden werden, die grauwertigen Bilddaten sind dann Teil der farbigen Bilddaten. Als konkretes Beispiel seien farbige Bilddaten in RGBW genannt, mit den drei eigentlichen Farbkomponenten rot, grün, blau und einer weiteren Farbkomponente weiß.

In den farbigen Bilddaten fehlt bevorzugt eine Farbkomponente mindestens einer Grundfarbe, und die fehlende Farbkomponente wird vor der Farbanpassung oder im Zuge der Farbanpassung aus den vorhandenen Farbkomponenten und den grauwertigen Bilddaten rekonstruiert. Das ermöglicht eine Vereinfachung des Bildsensors. In den grauwertigen Bilddaten beziehungsweise mit einer weißen Farbkomponente ist eine Überlagerung aller Grundfarben aufgenommen, so dass daraus die fehlende Grundfarbe isoliert werden kann, wenn die anderen Grundfarben aufgenommen sind. Die Rekonstruktion einer nicht originär aufgenommenen Farbkomponente neigt besonders zu Farbabweichungen. Das Verfahren des maschinellen Lernens kann auch solche Farbabweichungen ausgleichen und in der Zuordnungsvorschrift berücksichtigen. Dabei sind zwei Varianten vorstellbar. In der ersten Variante wird die fehlende Farbe zunächst rekonstruiert, und es findet anschließend eine Farbanpassung statt. In der zweiten Variante beinhaltet die Farbanpassung die Rekonstruktion. Die Zuordnungsvorschrift weist also aufgenommenen Farbkomponenten, in denen eine Grundfarbe fehlt, neue Farbkomponenten zu, die zugleich die fehlende Grundfarbe rekonstruieren und die Farbanpassung vornehmen.

Die vorhandenen Farbkomponenten oder aufgenommenen Grundfarben sind bevorzugt rot und blau. Die Aufnahme von additiven Grundfarben führt zu besonders guten Ergebnissen, was aber nicht bedeutet, dass die Rekonstruktion einer fehlenden Farbkomponente auf diese Farbrepräsentation beschränkt ist. Gerade das im Bayer-Pattern doppelt vorgesehene grün wird in dieser bevorzugten Ausführungsform nicht aufgenommen, so dass hierfür keine Lichtempfangspixel des Bildsensors vorgesehen sein müssen. Bei Bedarf wird grün aus den weißen, roten und blauen Farbkomponenten erzeugt.

Vorzugsweise werden optische Codes in den Bilddaten gefunden und gelesen. Dabei werden noch bevorzugter die grauwertigen Bilddaten für das Lesen von Codes und/oder die farbigen Bilddaten für das Auffinden codetragender Objekte und/oder von Codebereichen verwendet. Es ist prinzipiell möglich, optische Codes aus farbigen Bilddaten zu lesen. In den grauwertigen Bilddaten ergibt sich jedoch das bestmögliche Signal-Rauschverhältnis und je nach Auslegung des Bildsensors auch die höchste Auflösung, so dass Codelesen mit gleicher Qualität möglich ist wie mit einer herkömmlichen monochromen Bildaufnahme. Die Farbinformationen können für beliebige, aber auch für mit dem Codelesen verbundene Funktionen genutzt werden, beispielsweise ein anfängliches Segmentieren beziehungsweise Auffinden von Codebereichen. Häufig unterscheidet sich der Untergrund des Codes farblich von der Umgebung, oder die Farbinformation kann dafür verwendet werden, ein codetragendes Objekt zu erkennen und vom Hintergrund zu trennen. Alternativ werden die farbigen Bilddaten für irgendeine andere Funktion genutzt, insbesondere als solche ausgegeben und erst nachgelagert verwendet, sei es für Visualisierungs- und Diagnosefunktionen oder ganz andere Zusatzaufgaben. Damit können die beiden Funktionen Aufnahme eines für Codelesen besonders geeigneten Grauwertebildes und eines für unterstützende oder andere Zwecke nutzbaren Farbbildes miteinander verbunden werden, insbesondere in einem Gerät.

Die farbigen Bilddaten weisen bevorzugt eine geringere Auflösung auf als die grauwertigen Bilddaten. Das ist vorteilhaft in Fällen, in denen die Farbe nur unterstützend benötigt wird, beispielsweise ein Codelesen mit einem hochaufgelösten Grauwertbild und einem zusätzlichen Farbbild. Die geringere Auflösung kann bereits originär durch weniger oder größere Lichtempfangspixel einer jeweiligen Farbe entstehen. Alternativ findet ein Binning oder Downsampling auf Hardwareebene oder Softwareebene statt.

Farbige und grauwertige Bilddaten werden bevorzugt mit einem zeilenförmigen Bildsensor aufgenommen, der mindestens eine Zeilenanordnung von Lichtempfangspixeln aufweist, die zur Aufnahme der farbigen Bilddaten jeweils nur für Licht einer Farbe empfindlich sind, und mindestens eine Zeilenanordnung von Lichtempfangspixeln, die zur Aufnahme der grauwertigen Bilddaten für weißes Licht empfindlich sind. Der Bildsensor ist also ein Zeilensensor mit mehreren Zeilenanordnungen von Lichtempfangspixeln. Mit mehreren Zeilenanordnungen ist eine geringe Anzahl jedenfalls kleiner zehn gemeint, die Auflösung in Zeilenrichtung und damit die Anzahl Lichtempfangspixel in Zeilenrichtung ist um Größenordnungen höher und beträgt mehrere hundert, tausend oder mehr. In der mindestens einen Zeile zur Aufnahme der farbigen Bilddaten sind die Lichtempfangspixel beispielsweise mit einem Farbfilter versehen, wobei Lichtempfangspixel mit jeweiligen Farbfiltern verschiedene Anordnungen und Muster bilden können. In der mindestens einen Zeile zur Aufnahme der grauwertigen Bilddaten nehmen die Lichtempfangspixel das ganze optische Spektrum wahr und weisen insbesondere keinen Farbfilter auf. Eine Grenze des wahrgenommenen Lichts bilden natürlich die Hardwarebeschränkungen des Bildsensors. Prinzipiell könnten Lichtempfangspixel für farbige Bilddaten und grauwertige Bilddaten in derselben Zeile gemischt vorkommen, aber daraus ergeben sich Auflösungsverluste und jedenfalls vermeidbare Komplexitäten.

Die Lichtempfangspixel innerhalb einer Zeile zur Aufnahme der farbigen Bilddaten sind bevorzugt für dieselbe Farbe empfindlich. Mit anderen Worten ist eine solche Zeile einheitlich, beispielsweise eine rote Zeile, eine grüne Zeile oder eine blaue Zeile. Damit wird die entsprechende Farbinformation in voller Auflösung erfasst. Alternativ können die Lichtempfangspixel innerhalb einer Zeile auch für unterschiedliche Farben empfindlich sein, insbesondere in alternierender Reihenfolge wie rot-blau-rot-blau oder rot-grüngrün-blau. Weiterhin ist denkbar, einheitliche Zeilen und gemischte Zeilen miteinander zu kombinieren, etwa eine Zeile mit rot-blau-rot-blau und eine rein grüne Zeile.

Bevorzugt sind zwei, drei oder vier Zeilenanordnungen vorgesehen, von denen ein oder zwei Zeilenanordnungen zur Aufnahme der grauwertigen Bilddaten für weißes Licht empfindlich sind. Die genannten Zahlen sind hier genaue Angaben, keine Mindestangaben. Mit wenigen Zeilenanordnungen wird ein besonders kompakter Aufbau des Bildsensors erreicht. Ein Beispiel ist eine Doppelzeile mit einer Zeile für grauwertige Bilddaten und einer Zeile für farbige Bilddaten. Da sich mehrere Farben eine einzige Zeile für farbige Bilddaten teilen müssten, sind bevorzugt zumindest zwei Zeilen zur Aufnahme farbiger Bilddaten vorgesehen, um die Auflösung in Zeilenrichtung zu erhöhen.

Die Zeilenanordnungen für die Aufnahme farbiger Bilddaten weisen bevorzugt Lichtempfangspixel auf, die für jeweils eine von zwei Grundfarben empfindlich sind, und keine Lichtempfangspixel, die für die dritte Grundfarbe empfindlich sind. Grundfarben sind die additiven Grundfarben rot, grün und blau beziehungsweise die subtraktiven Grundfarben blaugrün (cyan), purpur (magenta) und gelb (yellow). Indem nur zwei davon vorgesehen sind, werden Lichtempfangspixel und Zeilenanordnungen eingespart. Die fehlende Grundfarbe kann wie oben beschrieben bei Bedarf rekonstruiert werden. Alternativ wäre denkbar, dass alle drei jeweiligen Grundfarben vorhanden sind (RGB und CMY beziehungsweise RGBW, CMYW).

In bevorzugter Weiterbildung ist eine Kamera vorgesehen, insbesondere eine Zeilenkamera, die einen Bildsensor zur Aufnahme farbiger Bilddaten und eine Steuer- und Auswertungseinheit aufweist, die für ein erfindungsgemäßes Verfahren zur Farbanpassung ausgebildet ist. Dabei sind alle beschriebenen Ausführungsformen denkbar. Die Kamera ist vorzugsweise ein kamerabasierter Codeleser.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera;
- Fig. 2: eine dreidimensionale Ansicht einer Anwendung der Kamera in fester Montage über einem Förderband mit Objekten, die in diesem Beispiel Codes tragen;
- Fig. 3: eine schematische Darstellung eines zeilenförmigen Bildsensors mit einer roten, einer blauen und einer weißen Zeile;
- Fig. 4: eine schematische Darstellung eines zeilenförmigen Bildsensors mit einer roten, einer blauen und zwei weißen Zeilen;
- Fig. 5: eine schematische Darstellung eines zeilenförmigen Bildsensors mit einer alternierend rot-blauen und einer weißen Zeile;
- Fig. 6: eine schematische Darstellung eines zeilenförmigen Bildsensors mit zwei alternierend rot-blauen und zwei weißen Zeilen;
- Fig. 7: ein beispielhaftes Ablaufdiagramm für ein Training eines neuronalen Netzes zur Farbanpassung;
- Fig. 8: ein beispielhaftes Ablaufdiagramm für die Anwendung des gemäß Figur 7 trainierten neuronalen Netzes zum Bestimmen einer Zuordnungsvorschrift oder Nachschlagtabelle zur Farbanpassung; und
- Fig. 9: ein beispielhaftes Ablaufdiagramm für eine Farbanpassung mittels der gemäß Figur 8 bestimmten Nachschlagtabelle.

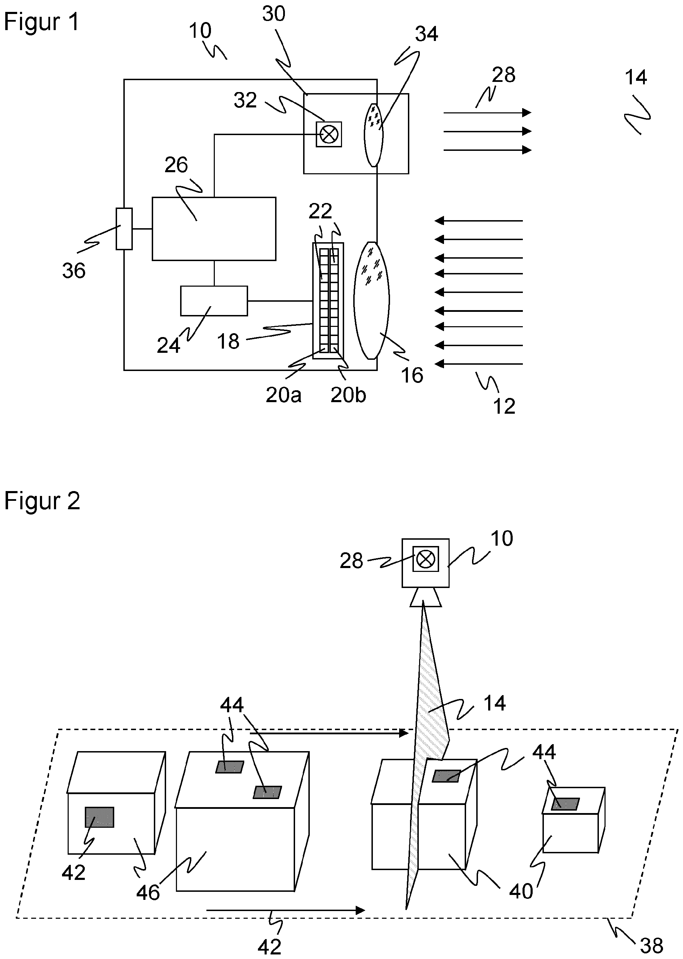

Figur 1 zeigt eine sehr vereinfachte Blockdarstellung einer Kamera 10. Die Kamera 10 erfasst Empfangslicht 12 aus einem Erfassungsbereich 14 durch ein Aufnahmeobjektiv 16, das hier nur durch eine einfache Linse repräsentiert ist. Ein zeilenförmiger Bildsensor 18 erzeugt Bilddaten des Erfassungsbereichs 14 und der dort gegebenenfalls vorhandenen Objekte. Der Bildsensor 18 weist zumindest zwei Zeilen 20a-b von lichtempfindlichen Empfangspixeln 22 auf, wobei in Zeilenrichtung eine Vielzahl von hunderten, tausenden oder noch mehr Empfangspixeln 22 vorgesehen sind. Die Ausgestaltung des Bildsensors 18 als Zeilensensor ist besonders vorteilhaft, aber die Erfindung bezieht sich auch auf andere Bildsensoren, also insbesondere einen als Matrixsensor ausgebildeten Bildsensor.

Die Bilddaten des Bildsensors 18 werden von einer Steuer- und Auswertungseinheit ausgelesen. Die Steuer- und Auswertungseinheit ist hier beispielhaft als Vorverarbeitungseinheit 24 mit einer nachgeordneten zweiten Verarbeitungseinheit 26 dargestellt. Vorzugsweise weist die Vorverarbeitungseinheit 24 ein FPGA (Field Programmable Gate Array) und die zweite Verarbeitungseinheit 26 einen Mikroprozessor (CPU, Central Processing Unit) auf. Allgemein kommen beliebige digitale Rechenbausteine in Betracht, außer einem FPGA und einer CPU also beispielsweise auch ein DSP (Digital Signal Processor), eine GPU (Graphics Processing Unit), eine NPU (Neural Processing Unit) oder eine TPU (Tensor Processing Unit). Die Erfindung kann ohne die zuletzt genannten KI-Beschleuniger auskommen, was aber deren Einsatz umgekehrt nicht ausschließt. Die Steuer- und Auswertungseinheit kann zumindest teilweise in einer angeschlossenen Recheneinheit implementiert sein, beispielsweise einem Computer, einem lokalen Netzwerk, einem Edge-Device oder einer Cloud.

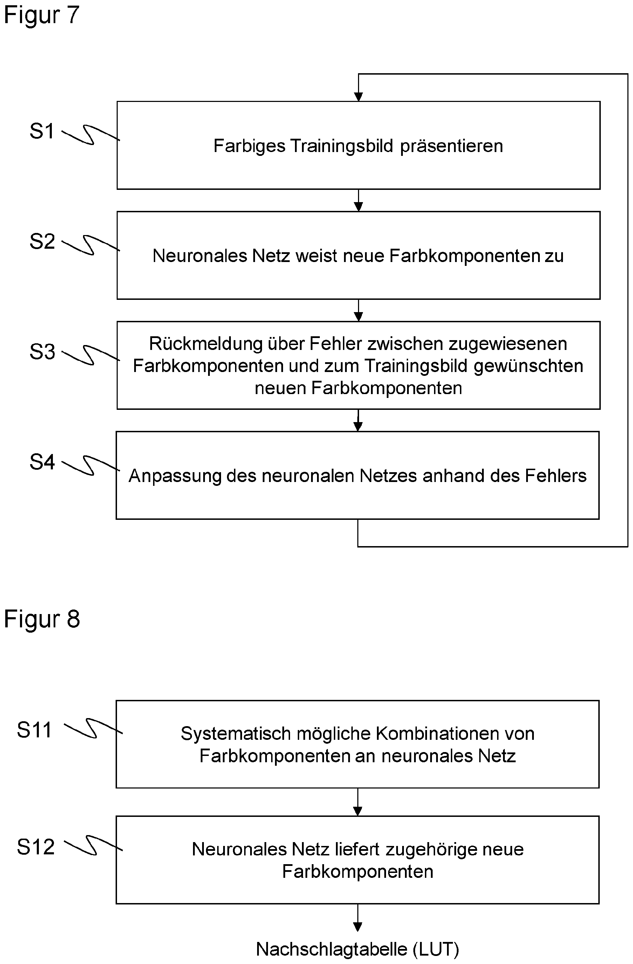

Ein bevorzugter Teil der Auswertung besteht darin, erfasste Bildzeilen zu einem Gesamtbild aneinanderzureihen. Ansonsten können bei der Auswertung die Bilddaten vorbereitend gefiltert, geglättet, helligkeitsnormiert, auf bestimmte Bereiche zugeschnitten oder binarisiert werden. Erfindungsgemäß ist eine Farbanpassung vorgesehen, die später unter Bezugnahme auf die Figuren 7 bis 9 genauer erläutert wird. Dann erfolgt typischerweise eine Segmentierung, in der einzelne Objekte aufgefunden werden. Im Falle des Codelesens werden speziell Codebereiche aufgefunden und darin enthaltene Codes dann decodiert, also die in den Codes enthaltene Information ausgelesen. Die Arbeitsteilung zwischen Vorverarbeitungseinheit 24 und zweiter Verarbeitungseinheit 26 sieht vorzugsweise vor, dass datenintensive, aber für sich einfache Schritte insbesondere mit dem Erfordernis, auf sämtliche Pixel zuzugreifen, von der Vorverarbeitungseinheit 24 erledigt werden. Komplexere Schritte insbesondere nur noch innerhalb interessierender Bereiche sind dann der zweiten Verarbeitungseinheit 26 zugewiesen. Die Vorverarbeitungseinheit 24 kann ihre Aufgaben bereits während des Streamens erfüllen, also schon während des Einlesens und Weitergebens von Bilddaten von dem Bildsensor 18 zu der zweiten Verarbeitungseinheit 26. Eine solche Verarbeitungspipeline oder on-the-fly-Verarbeitung ermöglicht eine Echtzeitverarbeitung, in der die Bilddaten praktisch schon vorverarbeitet sind, sobald sie überhaupt verfügbar werden. Insbesondere ist die Farbanpassung ein Schritt, der schon während des Streamens von der Vorverarbeitungseinheit 24 durchgeführt werden kann.

Um den Erfassungsbereich 14 mit Sendelicht 28 ausreichend hell auszuleuchten, ist vorzugsweise eine Beleuchtungseinrichtung 30 mit mindestens einer Lichtquelle 32 und einer Sendeoptik 34 vorgesehen, die abweichend von der Darstellung auch extern sein kann. An einer Schnittstelle 36 der Kamera 10 können Daten ausgegeben werden, beispielsweise Rohbilddaten, vorverarbeitete Bilddaten und sonstige Daten in verschiedenen Verarbeitungsstufen, wie identifizierte Objekte, gelesene Codeinformationen oder noch nicht decodierte Codebilddaten. Umgekehrt ist möglich, die Kamera 10 über die Schnittstelle 36 oder eine weitere Schnittstelle zu parametrieren.

Figur 2 zeigt eine mögliche Anwendung der Kamera 10 in Montage an einem Förderband 38, das Objekte 40 in einer Förderrichtung 42, wie durch den Pfeil angedeutet, durch den Erfassungsbereich 14 der Kamera 10 fördert. Die Objekte 40 können an ihren Außenflächen Codebereiche 44 tragen, wobei die mögliche Anwendung der Kamera 10 nicht auf Codelesen beschränkt ist. Im Falle des Codelesens ist Aufgabe der dann als kamerabasierter Codeleser ausgebildeten Kamera 10, die Codebereiche 44 zu erkennen, die dort angebrachten Codes auszulesen, zu dekodieren und dem jeweils zugehörigen Objekt 40 zuzuordnen. Um auch seitlich angebrachte Codebereiche 46 zu erkennen, werden vorzugsweise mehrere Kameras 10 aus unterschiedlicher Perspektive eingesetzt. Es kann zusätzliche Sensoren geben, beispielsweise einen vorgelagerten Laserscanner zur Erfassung der Geometrie der Objekte 40 oder einen Inkrementalgeber zur Erfassung der Geschwindigkeit des Förderbandes 38.

Der Erfassungsbereich 14 der Kamera 10 ist entsprechend dem zeilenförmigen Bildsensor 18 eine Ebene mit einem zeilenförmigen Lesefeld. Indem die Objekte 40 in der Förderrichtung 42 zeilenweise aufgenommen werden, entsteht nach und nach ein Gesamtbild der vorbeigeförderten Objekte 40 samt der Codebereiche 44. Die Zeilen 20a-b liegen dabei so nahe beieinander, dass sie praktisch den gleichen Objektabschnitt erfassen. Alternativ könnte ein Versatz auch rechnerisch kompensiert werden.

Die Kamera 10 erfasst mit ihrem Bildsensor 18 farbige Bilddaten oder ein Farbbild. Die Farbinformation kann für verschiedenste Zwecke genutzt werden. Neben einer Farbwiedergabe für einen menschlichen Betrachter kann das beispielsweise die Klassifizierung von Objekten 40 sein, etwa um herauszufinden, ob es sich um ein Paket, einen Briefumschlag oder einer Tüte handelt. Es kann festgestellt werden, ob ein Förderbandbehältnis leer ist, wie eine Schale eines Schalenförderers oder eine Kiste. Das Segmentieren der Bilddaten in Objekte 40 oder Codebereiche 44 kann anhand der Farbinformation vorgenommen oder davon unterstützt werden. Es können zusätzliche Bilderkennungsaufgaben gelöst werden, wie die Erkennung bestimmter Aufdrucke oder Aufkleber beispielsweise zur Gefahrgutkennzeichnung, oder Schriften gelesen werden (OCR, Optical Character Recognition).

Die Kamera 10 erfasst vorzugsweise mit ihrem Bildsensor 18 zusätzlich grauwertige Bilddaten oder ein Grauwert- beziehungsweise Schwarz-Weiß-Bild. In einem vereinheitlichten Sprachgebrauch kann dies so verstanden werden, dass neben den eigentlichen Farbkanälen, wie rot, grün und blau, auch ein weißer Farbkanal vorgesehen ist. Es ist aber nicht in allen Ausführungsformen notwendig, dass es den weißen Farbkanal gibt. Dabei wird die Repräsentation RGB eines Farbraums im Folgenden stellvertretend verwendet, ohne damit andere Repräsentationen auszuschließen, von denen einleitend mehrere beispielhaft genannt sind.

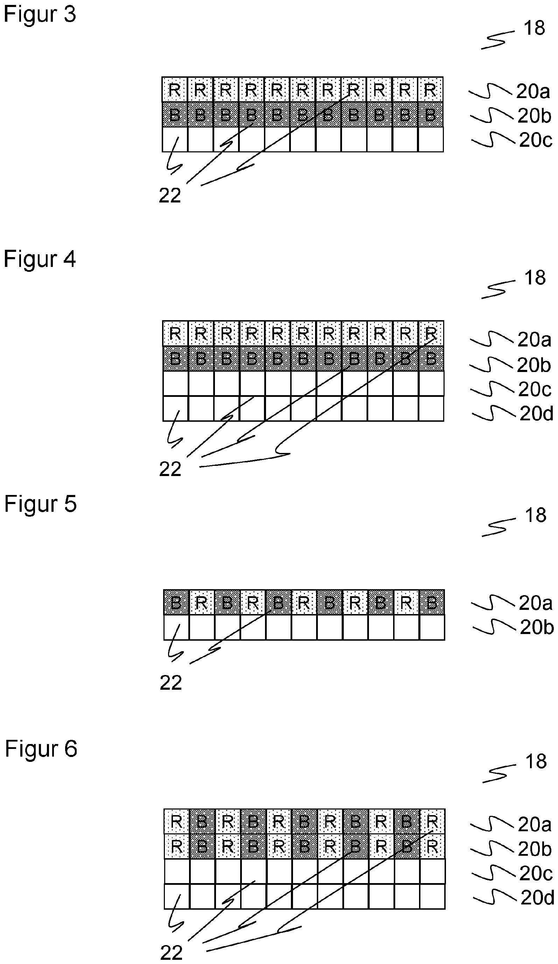

Die Figuren 3 bis 6 zeigen einige Beispiele von Ausführungsformen einer als Zeilenkamera ausgebildeten Kamera 10 mit einem Bildsensor 18 in Form eines Zeilensensors für eine gemeinsame Erfassung von Schwarz-Weiß-Bildern und Farbinformationen mit einer Zeilenkamera. Gemeinsam ist diesen Ausführungsformen, dass zumindest eine der Zeilen 20a-d eine weiße Zeile ist, deren Empfangspixel 22 in den Grenzen der Hardware Licht über das gesamte Spektrum erfassen. Zumindest eine weitere Zeile 20a-d ist eine farbige Zeile, deren Empfangspixel 22 nur für eine bestimmte Farbe empfindlich sind, insbesondere durch entsprechende Farbfilter. Die Verteilung der Farben über die jeweiligen Empfangspixel 22 der farbigen Zeilen unterscheidet sich je nach Ausführungsform, weicht jedoch in den dargestellten Ausführungsformen von dem auch möglichen, aber nicht gezeigten üblichen RGB und insbesondere einem Bayer-Pattern ab. Wie bereits erwähnt, ist die Erfindung nicht auf Ausführungsformen mit einer weißen Zeile beschränkt, es sind abweichend auch rein farbige Bildsensoren 18 möglich.

Figur 3 zeigt eine Ausführungsform mit je einer roten Zeile 20a, einer blauen Zeile 20b und einer weißen Zeile 20c. Die Zeilen 20a-c sind also in sich homogen und die Empfangspixel 22 innerhalb einer Zeile 20a-c für ein gleiches optisches Spektrum empfindlich. Figur 4 zeigt eine Variante mit einer zusätzlichen weißen Zeile 20d.

In der Ausführungsform nach Figur 5 sind für rot und für blau empfindliche Empfangspixel 22 innerhalb einer farbigen Zeile 20a alternierend gemischt. Dadurch ist in Kombination mit einer weißen Zeile 20b ein Aufbau mit insgesamt nur zwei Zeilen möglich. Figur 6 zeigt eine Variante, in der sowohl die farbige Zeile 20a-b als auch die weiße Zeile 20c-d gedoppelt ist.

Diese Beispiele sind nur eine Auswahl basierend auf den Grundfarben rot und blau mit weiß (RBW). Weitere Ausführungsformen nutzen andere Farbfilter und Farben. So wäre auch die Verwendung von grün mit rot oder blau (RGW, BGW) oder aller drei Grundfarben (RGBW) denkbar. Weiterhin kommen auch die subtraktiven Grundfarben blau-grün (cyan), purpur (magenta) und gelb (yellow) in analogen Kombinationen in Betracht (CMW, CYW, MYW oder CMYW).

In den Ausführungsbeispielen der Figuren 3 bis 6 werden zunächst nur Bilddaten in den zwei Grundfarben rot und blau aufgenommen. Ist eine Repräsentation der Farbe in RGB-Werten erwünscht, so lässt sich die fehlende Farbe grün durch G=W-R-B oder allgemeiner eine Funktion f(W, R, B) zumindest annähernd rekonstruieren. Die Rekonstruktion ist analog für eine andere fehlende Farbe möglich. Nach einer Rekonstruktion ist eine Farbanpassung oder ein Farbabgleich besonders vorteilhaft, weil zusätzliche Farbverfälschungen eingeführt worden sein können. Die farbigen Zeilen werden überdies vorzugsweise absichtlich mit höherer Verstärkung betrieben, um die Auswirkungen der im Vergleich zu der weißen Zeile geringeren Photonenausbeute zu begrenzen. Auch das führt zu zusätzlichen Farbverfälschungen. Die nun im Anschluss beschriebene Farbanpassung ist also für eine hybride Zeilenkamera mit weißen und farbigen Zeilen besonders vorteilhaft, insbesondere wenn eine Farbe aus der weißen Zeile rekonstruiert wird. Die erfindungsgemäße Farbanpassung ist aber auch für rein farbige Bildsensoren beispielsweise mit einem Bayer-Pattern oder jeglicher sonstigen an sich bekannten Farberfassung anwendbar, und dies sowohl für die beschriebenen Zeilensensoren als auch für Matrixsensoren.

Figur 7 zeigt ein beispielhaftes Ablaufdiagramm für ein Training eines neuronalen Netzes zur Farbanpassung. Das neuronale Netz oder tiefe neuronale Netz (Deep Learning) ist ein Beispiel für ein Verfahren des maschinellen Lernens, an dem die Erfindung erläutert wird. Das neuronale Netz erhält jeweils als Eingang die Farbkomponenten eines Bildpunktes, also beispielsweise je einen Farbwert für rot, grün und blau. Je nach Repräsentation ist der eingangsseitige Farbvektor stattdessen aus einer roten, zwei grünen und einer blauen Farbkomponente entsprechend einem Bayer-Pattern, aus einer wei-ßen, einer roten und einer blauen Farbkomponente, aus einer weißen, einer roten, einer grünen und einer blauen Farbkomponente oder den Farbkomponenten eines Farbvektors in einem anderen Farbraum zusammengesetzt, von denen einleitend beispielhaft einige genannt sind. Als Ausgang liefert das neuronale Netz farbkorrigierte oder farbabgeglichene Farbkomponenten in demselben Farbraum oder einem gewünschten anderen Farbraum. Das neuronale Netz kann also beispielsweise RGB in angepasste RGB transformieren, aber auch RGB in angepasste CMY oder angepasste Lab. In einer besonders bevorzugten Ausführungsform erhält das neuronale Netz eingangsseitig Farbkomponenten, in denen eine Grundfarbe fehlt, wie beispielsweise eine weiße, eine rote und eine blaue Farbkomponente. Das neuronale Netz liefert dann zugleich die fehlende Farbkomponente und sorgt für eine Farbanpassung, stellt also im Beispiel ausgangsseitig eine rote, eine grüne und eine blaue Farbkomponente oder auch je eine CMY-Farbkomponente bereit. Die beiden Schritte der Rekonstruktion einer Farbe und der Farbanpassung sind dann zusammengefasst.

Ziel des Trainings ist, dass die ausgangsseitigen Farbkomponenten den gewünschten Sollwerten entsprechen, und dies wie bei einem Verfahren des maschinellen Lernens üblich nicht nur für die Trainingsdaten selbst, sondern auch für neue, während des Trainings nie gesehene Daten. Dementsprechend ist für das dargestellte Training erforderlich, dass es Trainingsdaten gibt, die Bilddaten im ursprünglichen Farbraum die gewünschten Farbkomponenten im Zielfarbraum zuordnen. Solche Trainingsdaten lassen sich beispielsweise dadurch erzeugen, dass die Szenerie einmal mit dem Bildsensor 18 der Kamera 10 und einmal mit einem farbkalibrierten weiteren Sensor aufgenommen wird. Natürlich ist jedes andere Verfahren zum Labeln oder Annotieren der Trainingsdaten einschließlich einer manuellen oder halbmanuellen Farbzuweisung ebenso möglich.

Mit diesen Vorbemerkungen wird nun im Ablauf der Figur 7 in einem ersten Schritt S1 dem neuronalen Netz ein farbiges Trainingsbild präsentiert. Damit sind farbige Bilddaten irgendeiner Form gemeint, die Bildpunkte mit einer möglichen, von dem Bildsensor 18 aufgenommen Farbe enthalten und zu denen die Sollfarbe bekannt ist. Ein Bildzusammenhang im eigentlichen Sinn ist dafür nicht erforderlich. Alternativ ist denkbar, das neuronale Netz nicht rein punktweise, sondern doch anhand von Bildern oder Bildabschnitten im eigentlichen Sinne zu trainieren, damit es einen Umgebungszusammenhang in das Lernen seiner Farbzuweisungen einbezieht. Eine dafür geeignete Architektur des neuronalen Netzes stellt ein Faltungsnetz dar (CNN, Convolutional Neural Network). Damit kann beispielsweise ein Debayering von Pixeln implementiert werden. Das neuronale Netz wird dadurch aber komplexer.

Das neuronale Netz weist nun in einem Schritt S2 neue Farbkomponenten zu. Zu Beginn des Trainings ist das ein weitgehend zufälliges Ergebnis, das sich erst mit Fortgang des Trainings immer weiter verbessert. In einem Schritt S3 erhält das neuronale Netz eine Rückmeldung über den Fehler zwischen den von ihm zugewiesenen Farbkomponenten und den aus dem Vorwissen des Trainingsbilds bekannten Sollwerten. Dieser Fehler wird in einem Schritt S4 genutzt, um die Gewichte des neuronalen Netzes anzupassen, beispielsweise mittels Backpropagation. Die Trainingsschleife wird im Schritt S1 wiederholt, bis ein vorgegebenes Trainingsziel erreicht ist, das an einem zuvor als Testdatensatz separierten Teil der Trainingsdaten gemessen werden kann.

Mit den gelernten Gewichten könnte das neuronale Netz nun genutzt werden, um jeweiligen Bildpunkten von Aufnahmen des Bildsensors 18 angepasste Farben zuzuordnen. Erfindungsgemäß ist aber eine solche Inferenz zur Laufzeit gerade nicht vorgesehen, da dies je nach Größe des neuronalen Netzes sehr aufwändig werden kann und die Inferenz für jeden farbangepassten Bildpunkt durchgeführt werden müsste. Vielmehr ist das neuronale Netz im Betrieb oder zur Laufzeit an der Farbanpassung nicht mehr beteiligt, wie sogleich erläutert.

Figur 8 zeigt ein beispielhaftes Ablaufdiagramm für die Anwendung des gemäß Figur 7 trainierten neuronalen Netzes zum Bestimmen einer Zuordnungsvorschrift oder Nachschlagtabelle zur Farbanpassung. Damit wird das neuronale Netz durch die Zuordnungsvorschrift oder Nachschlagtabelle approximiert.

In einem Schritt S11 wird systematisch eine (weitere) mögliche Kombination von Farbkomponenten erzeugt und dem neuronalen Netz eingangsseitig zugeführt. Beispielsweise wird in einer 8-Bit-Repräsentation der Farbkomponenten RGB mit dem Wert (0,0,0) begonnen, und es werden nach und nach über (0,0,255), (0,1,0), ... (255,255,255) die möglichen 256³ Kombinationen durchgespielt.

In einem Schritt S12 bestimmt das neuronale Netz zu den jeweiligen Farbkomponenten die zugehörigen farbkorrigierten Farbkomponenten. Sofern der Zielfarbraum dem ursprünglichen Farbraum entspricht, was nicht notwendig der Fall ist, handelt es sich dabei wiederum um Tripel (r, g, b) mit Werten zwischen 0 und 256. Wie mehrfach erwähnt, müssen ursprünglicher Farbraum und Zielfarbraum einander weder in Dimension noch Farbkomponenten entsprechen, beispielsweise wenn Werte WRB nach RGB angepasst werden, oder RGBW nach CYMK oder andere Farbraumkombinationen.

Sind die Schritte S11 und S12 für alle Farbkombinationen des ursprünglichen Farbraums durchgeführt, so ergeben sich daraus eine Vielzahl von Zuordnungen, die beispielsweise tabellarisch gesammelt und gespeichert werden (LUT, Lookup Table). Auf die entstandene Nachschlagtabelle kann also geordnet über einen der möglichen Eingangswerte zugegriffen werden, wie (0,0,0), ..., (255,255,255), um die zugehörige Vorhersage des neuronalen Netzes aus Schritt S12, also beispielsweise ein Tupel (r, g, b). Sofern das nicht schon im Training berücksichtigt wurde, kann es passieren, dass das neuronale Netz im Einzelfall ungültige Farbkomponenten ausgibt, im Beispiel einen RGB-Wert unter Null oder über 255, der dann mit dem entsprechenden Grenzwert überschrieben werden kann.

Es ist vorstellbar, aus den Einzelergebnissen der Schritte S11 und S12 eine andere zusammenfassende Zuordnungsvorschrift zu erstellen als eine Nachschlagtabelle, beispielsweise durch Funktionsfit mit einer nichtlinearen Näherungsfunktion. Jedenfalls ist gleichsam das Wissen des neuronalen Netzes nun in der Zuordnungsvorschrift oder Nachschlagtabelle festgehalten.

Das neuronale Netz ist vorzugsweise in der Steuer- und Auswertungseinheit 24, 26 der Kamera 10 implementiert, wobei aber dort die Rechenressourcen nur für langsame Inferenzzeiten ausreichen, die im eigentlichen Betrieb nicht ausreichen würden. Alternativ finden Training und/oder Inferenz des neuronalen Netzes zumindest teilweise außerhalb der Kamera 10 statt, und in der Steuer- und Auswertungseinheit 24, 26 wird lediglich die resultierende Zuordnungsvorschrift oder Nachschlagtabelle gespeichert.

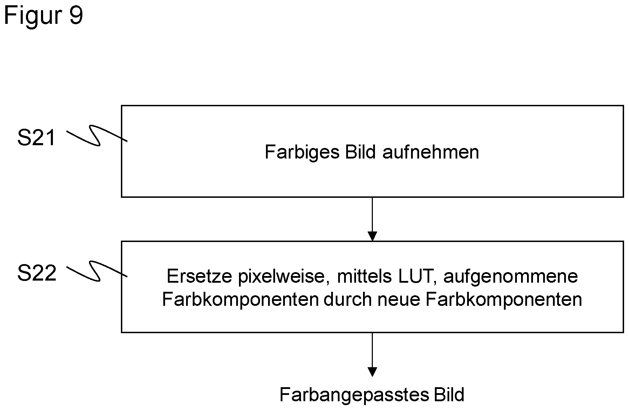

Figur 9 zeigt ein beispielhaftes Ablaufdiagramm für eine Farbanpassung mittels der gemäß Figur 8 bestimmten Nachschlagtabelle. In einem Schritt S21 wird mit dem Bildsensor 21 ein farbiges Bild aufgenommen.

Mit Hilfe der Zuordnungsvorschrift oder Nachschlagtabelle werden in einem Schritt S22 die aufgenommenen Farbkomponenten durch neue, farbangepasste Farbkomponenten ersetzt. Dieser Schritt ist vorzugsweise in der Vorverarbeitungseinheit 24 implementiert, die dies nochmals bevorzugt schon on-the-fly während des Einlesens weiterer Bilddaten von dem Bildsensor 18 durchführt. Ein Zugriff auf die Nachschlagtabelle kann besonders einfach dadurch erfolgen, dass die ursprünglich aufgenommenen Farbkomponenten zu einer Adresse aneinandergereiht werden. Das ergibt bei drei 8-Bit-Farbkomponenten eine 24-Bit-Adresse, an der bei eingehaltener Ordnung der Nachschlagtabelle die zugehörigen farbkorrigierten Farbkomponenten stehen. Die farbkorrigierten Farbkomponenten sind vorzugsweise ebenfalls in 24 Bit hinterlegt.

Für die Farbanpassung genügt somit ein Zugriff auf die Zuordnungsvorschrift oder Nachschlagtabelle. Das neuronale Netz wird dazu nicht benötigt, Inferenzen zur Laufzeit sind nicht erforderlich. Insbesondere erschöpft sich die Farbanpassung mit dem skizzierten Vorgehen zur Laufzeit in einem einfachen Zusatzschritt des Streamings lediglich mit einer indirekten Adressierung durch die aufgenommenen Farbkomponenten.

Der Adressraum einer Nachschlagtabelle kann groß werden. Bei einer Bittiefe der Farbkomponenten von acht ergeben sich für RGB insgesamt 256³ Einträge. Um nicht so viel Speicher zu verbrauchen, kann der Farbraum quantisiert und beispielsweise auf eine Bittiefe von fünf reduziert werden. Es können also künstlich nur noch bestimmte Werte im Farbraum angenommen werden. Die aufgenommenen Farbkomponenten werden erst auf fünf Bit reduziert, ehe das neuronale Netz beziehungsweise zur Laufzeit die Nachschlagtabelle konsultiert wird. Der Adressraum ist entsprechend auf 32³ reduziert und lässt sich wesentlich leichter speichern, insbesondere in einem FPGA als Vorverarbeitungseinheit 24. Dementsprechend ist die Adresse nun eine 15-Bit-Zahl. Der Inhalt der Nachschlagtabelle, also die zurückgegebenen angepassten Farbkomponenten, ist im Grundsatz von der Reduktion oder Quantisierung entkoppelt und könnte weiterhin eine 24-Bit-Zahl sein. Passender ist, an dieser Stelle keine tatsächlich nicht vorhandene Genauigkeit vorzutäuschen und angepasste Farbkomponenten gleicher Bittiefe zurückzugeben, im Zahlenbeispiel also eine 15-Bit-Zahl aus 3x5 Bit, die womöglich mit Nullen zu 3x8-Bit aufgefüllt sind, um sie übersichtlicher speichern zu können.

Es ist möglich, die wegen der Reduktion oder Quantisierung etwas gröber abgestuften Farbkomponenten zu interpolieren. Allerdings ist der Farbraum mehrdimensional, typischerweise dreidimensional, so dass es für jeden Farbwert 2³=8 Nachbarwerte gibt, die als Grundlage der Interpolation der Nachschlagtabelle entnommen werden müssen. So viele Zugriffe sind insbesondere in Echtzeit oder während des Streamings nicht ohne Weiteres möglich, zumindest kann es dafür erforderlich werden, den Zugriffstakt zu erhöhen und/oder den Zugriff zu parallelisieren. Außerdem ist die Interpolation selbst etwas aufwändiger. Daher ist auch denkbar, die Farbkomponenten nur einzeln zu interpolieren. Damit reduzieren sich die Zugriffe immerhin auf 2*3=6, und die einzelnen Interpolationen werden sehr einfach.

Wird mit einer Nachschlagtabelle mit reduziertem Adressraum gearbeitet, wie soeben diskutiert, dann sollte auch das Training adaptiert werden. Die Sollwerte zu den Trainingsdaten werden dann entsprechend der reduzierten Bittiefe gerundet, also beispielsweise der Wert 29/255 auf 32/255. Das eigentliche Training erfolgt zwar typischerweise mit Fließkommazahlen, aber wenn die Sollwerte entsprechend gerundet umgerechnet werden, sind die durch Quantisierung verursachten Sprünge im Training bereits vorhanden, und das neuronale Netz kann so eine optimale Zuordnung erlernen.

Es ist denkbar, die Zuordnungsvorschrift oder Nachschlagtabelle mehrfach zu implementieren, um durch Parallelisierung zusätzliche Bandbreite zu gewinnen. Da die Zuordnungsvorschrift oder Nachschlagtabelle vorab festgelegt wird, kann sie in einem ROM gespeichert werden. Eine alternative Speicherung in einem variablen Speicher hat den Vorteil, dass eine spätere Rekonfiguration beispielsweise an spezielle Anwendungsanforderungen vereinfacht wird.

## Patentansprüche

1. Verfahren zur Farbanpassung von farbigen Bilddaten, die von einem Bildsensor (18) als eine Vielzahl von Bildpunkten mit jeweils mehreren Farbkomponenten aufgenommen werden, wobei den Bildpunkten jeweils neue, farbangepasste Farbkomponenten zugewiesen werden und die Information, welche neuen Farbkomponenten zuzuweisen sind, durch ein Verfahren des maschinellen Lernens bestimmt wird, insbesondere ein neuronales Netz,
**dadurch gekennzeichnet,**
**dass** das Verfahren des maschinellen Lernens vorab eine Zuordnungsvorschrift bestimmt, insbesondere eine Nachschlagtabelle, die möglichen aufgenommenen Farbkomponenten farbangepasste Farbkomponenten zuweist, und dass dann die Farbanpassung ohne weitere Beteiligung des Verfahrens des maschinellen Lernens mit der Zuordnungsvorschrift erfolgt.

2. Verfahren nach Anspruch 1,
wobei das Verfahren des maschinellen Lernens für die Bestimmung der festen Zuordnungsvorschrift in einem überwachten Lernen mit Trainingsbilddaten trainiert ist, für die zu den Farbkomponenten der Bildpunkte eines jeweiligen Trainingsbildes die neuen Farbkomponenten vorgegeben sind.

3. Verfahren nach Anspruch 2,
wobei das Verfahren des maschinellen Lernens für eine individuelle Kamera (10) und/oder eine bestimmte Anwendungssituation trainiert wird.

4. Verfahren nach einem der vorhergehenden Ansprüche,
wobei die Zuordnungsvorschrift bereits auf Bildpunkte der Bilddaten angewandt wird, noch während weitere Bildpunkte der Bilddaten aus dem Bildsensor (18) ausgelesen und/oder von dem Bildsensor (18) aufgenommen werden.

5. Verfahren nach einem der vorhergehenden Ansprüche,
wobei die Farbanpassung mittels Zuordnungsvorschrift auf einem Vorverarbeitungsbaustein (24) implementiert ist, insbesondere einem FPGA (Field Programmable Gate Array), der mit dem Bildsensor (18) verbunden ist.

6. Verfahren nach einem der vorhergehenden Ansprüche,
wobei der Bildsensor (18) die farbigen Komponenten mit einer ersten Bittiefe aufnimmt und die Nachschlagtabelle Einträge nur für eine zweite Bittiefe kleiner der ersten Bittiefe aufweist, insbesondere die erste Bittiefe acht Bit beträgt und die zweite Bittiefe drei bis sieben Bit.

7. Verfahren nach Anspruch 6,
wobei neue Farbkomponenten für fehlende Einträge der Nachschlagtabelle interpoliert werden.

8. Verfahren nach einem der vorhergehenden Ansprüche,
wobei grauwertige Bilddaten der mit den farbigen Bilddaten erfassten Szenerie (14) aufgenommen werden.

9. Verfahren nach Anspruch 8,
wobei in den farbigen Bilddaten eine Farbkomponente mindestens einer Grundfarbe fehlt und die fehlende Farbkomponente vor der Farbanpassung oder im Zuge der Farbanpassung aus den vorhandenen Farbkomponenten und den grauwertigen Bilddaten rekonstruiert wird.

10. Verfahren nach einem der vorhergehenden Ansprüche,
wobei optische Codes (44) in den Bilddaten gefunden und gelesen werden.

11. Verfahren nach Anspruch 10 und einem der Ansprüche 8 oder 9,
wobei die grauwertigen Bilddaten für das Lesen von Codes (44) und/oder die farbigen Bilddaten für das Auffinden codetragender Objekte (40) und/oder von Codebereichen verwendet werden

12. Verfahren nach einem der vorhergehenden Ansprüche,
wobei farbige und grauwertige Bilddaten mit einem zeilenförmigen Bildsensor (18) aufgenommen werden, der mindestens eine Zeilenanordnung (20a-d) von Lichtempfangspixeln (22) aufweist, die zur Aufnahme der farbigen Bilddaten jeweils nur für Licht einer Farbe empfindlich sind, und mindestens eine Zeilenanordnung (20a-d) von Lichtempfangspixeln (22), die zur Aufnahme der grauwertigen Bilddaten für weißes Lichtempfindlich sind.

13. Kamera (10), insbesondere Zeilenkamera, mit einem Bildsensor (18) zur Aufnahme farbiger Bilddaten und mit einer Steuer- und Auswertungseinheit (24, 26), die für ein Verfahren zur Farbanpassung nach einem der vorhergehenden Ansprüche ausgebildet ist.
